# EUROPEAN PATENT APPLICATION

(11) **EP 3 184 964 A1**
(43) Date of publication of application: **28.06.2017**
(21) Application number: 15202100.2
(22) Date of filing: 22.12.2015
(51) Int. Cl.: G01C 21/34

(54) **NAVIGATION DEVICE**

(71) Applicant: Panasonic Automotive & Industrial Systems Europe GmbH, 63225 Langen (DE)
(72) Inventor: HAGE, Marwan, 63225 Langen (DE)
(74) Representative: Grünecker Patent- und Rechtsanwälte PartG mbB

(57) **Abstract**

The present invention relates to an improved vehicle navigation device that is capable of simulating the journey of a vehicle on an alternative travelling route in real time and based on real traffic data, together with indicating the guidance of the vehicle along a selected actual route. The vehicle navigation device is thus capable of indicating, on a common display screen, both the actual position of the vehicle on the actually driven route, and a simulated position where the vehicle would have been located at the same instance of time if the alternative route had been chosen for driving thereon.

## Description

### FIELD OF THE INVENTION

The present invention relates to navigation systems for vehicles. More specifically, the present invention relates to navigation systems having the capability of processing both pre-stored data such as map data, current positioning data, and data related to a current traffic situation received in real-time.

### BACKGROUND ART

Navigation systems have now become accessories of vehicles for many years.

Initially, navigation systems were basically adapted to pre-calculate a route from a starting point of a desired journey to a destination and to indicate the pre-calculated route on a street map displayed on a display arranged in the vehicle so as to be visible to a driver or to other people travelling in the vehicle. In order not to distract the driver, acoustic information, in particular speech information, was output as well. The pre-calculation of the route was performed on the basis of pre-stored map data, which could be augmented with information about the particular streets, for example, speed limits on certain street sections or other traffic restrictions.

During the actual journey, the navigation system receives positioning data such as data of the Global Positioning System (GPS) in real-time so as to indicate a current position of the vehicle on the pre-calculated route in real-time.

In addition, navigation systems generally allow for pre-calculation of different routes between a given starting point and destination point, based on a plurality of criteria offered to a person operating the navigation device for setting up a route, such as minimum distance of travelling, minimum travelling time (fastest route) or a route leading through a desired intermediate destination. If a plurality of different routes has been pre-calculated, the user selects one of the routes before starting the actual journey. If while travelling a driver voluntarily or accidentally leaves the pre-calculated and selected route (which is indicated to the navigation system by the received positioning data), the navigation device usually initially tries to return the driver to the pre-calculated route, but after the driver has ignored the routing back for a predetermined time or distance of travelling, the navigation device re-calculates a new route to the point of destination, leading the vehicle via the accidentally or voluntarily selected street section.

It was a drawback of those initial navigation systems that with the exception of the received positioning data (GPS data), the system relied only on static information, i.e. pre-stored data. No information relating to dynamic traffic data such as short time closing of a route (street section) or, in particular traffic congestion ("traffic jam") was available to the system while travelling in real-time. Hence, initial versions of navigation systems could not avoid leading the driver along a route which was actually not advisable at the current point of time since it may have been leading the driver through a section of congested streets, and thus may have considerably extended travelling time as compared to the pre-calculated time.

For addressing said drawback, current vehicle navigation systems have an additional feature which is sometimes called "traffic jam avoidance feature". A navigation system having the features outlined above is further adapted to receive traffic-related data in real-time, such as Traffic Message Channel (TMC) data. TMC data are digital data broadcast in a non-audible range of a radio signal for indicating traffic disturbances, in particular traffic jams in real-time. Based on such received data, the current vehicle navigation systems are capable of recommending a new route (diverting from the current route) to the driver, avoiding the traffic disturbances indicated by the received traffic-related data. Thereby, the navigation system may trigger a re-routing in case there is a traffic jam on the originally calculated (pre-calculated) route.

Nevertheless, it rests upon the driver to decide whether to either follow the new suggestion of the navigation system or to remain on the originally selected route despite the risk of an extended travelling time as a result of congestion. Such a decision may generally be difficult to make, since the quality of the received traffic-related data generally differs from time to time, from region to region or from country to country.

Thus it quite often happens that a user decides to take the newly proposed road but does not actually know whether the decision to follow the proposal of the navigation system he or she made was right or not. Therefore, when the same driver is in the same situation next time, he or she once again lacks any additional information which may support the decision to be made.

It is therefore desirable to have a navigation system that is capable of assisting a driver in the aforementioned decision.

### SUMMARY OF THE INVENTION

The present invention aims to provide an improved navigation device that is capable of assisting the driver in an assessment of whether a selection by the driver of one of a plurality of proposed alternative routes was beneficial or not.

This is achieved by the features of the independent claims.

According to a first aspect of the present invention, a navigation device is provided. The navigation device comprises a display rendering module for rendering the street map of a region in which a vehicle travels, an indication of an actual route on which the vehicle travels on the street map and an indication of an alternative route for the vehicle on the street map, for display on a display device. The vehicle navigation device further comprises a first receiving module for receiving real time positioning data and a second receiving module for receiving real time traffic data. Still further, the vehicle navigation device comprises a first route guidance module for calculating the position of the vehicle on the actual route in real time, based on the received positioning data and a second route guidance module for calculating a simulated position of the vehicle on the alternative route based on the received traffic data. The simulated position corresponds in time to the position calculated by the first guidance module. The display rendering module is adapted to render an indication of the calculated position of the vehicle on the actual route and an indication of the simulated position on the alternative route for display on the display device.

According to a second aspect of the present invention, an automated method performed by a navigation device is provided. The method comprises the steps of displaying a street map of a region in which a vehicle is travelling, on a display, displaying an indication of an actual route on which the vehicle is travelling on the street map and displaying an indication of an alternative route for the vehicle on the street map. The method further comprises the steps of receiving real time positioning data and of receiving real time traffic data. Further, the method comprises the step of calculating a position of the vehicle on said actual route in real time, based on the received positioning data and the step of calculating a simulated position of the vehicle on the alternative route based on the received traffic data, wherein the simulated position corresponds in time to the calculated position on the actual route. Finally, the method comprises the step of displaying an indication of the calculated position of the vehicle on the actual route and an indication of the simulated position on the alternative route.

In accordance with a further particular aspect of the present invention, an infotainment system for a vehicle including a navigation device according to the first aspect and a display device is provided.

In accordance with yet another particular aspect of the present invention, a vehicle comprising an infotainment system according to the above further particular aspect is provided.

In accordance with yet another aspect of the present invention, a computer program product including program code for causing a computer to perform all steps of a method according to the second aspect, when executed by the computer, is provided.

It is the particular approach of the present invention that a vehicle navigation device is provided which is capable of indicating, besides a real position of a vehicle on an actual route on which the vehicle is travelling, also a simulated position on an alternative route not selected for travelling, corresponding to the same instance of time. This means that a driver (user) can see where the vehicle would currently be if the alternative route had been selected. In particular, the driver (user) can ascertain whether the common point of destination of both routes would have been reached earlier or later when travelling on the alternative route. The simulation is based on traffic data received and permanently updated in real time so that the travelling speed assumed for the simulation takes into account the actual development of the traffic situation on the alternative route, for example, when there is a traffic jam.

Based on the provided information, the user can better assess whether or not the selection of the actual route was right, and thus it becomes easier for him or her to reach a decision next time. Also, the navigation device may be able to collect information regarding travelling time on alternative routes, for providing user feedback that may be helpful for improving the navigation re-routing algorithm.

Preferably, the actual route and the alternative route are routes proposed by the vehicle navigation device for selection in order to travel from a predetermined starting point to a predetermined point of destination. Hence, the driver is provided with some information about whether an alternative travelling route to reach the desired destination is likely to have been slower or faster than the selected one, and whether his or her selection of one of the routes was beneficial.

In accordance with a preferred embodiment, the alternative route is a route originally proposed by the navigation device, i.e. a pre-calculated route, and the actual route is an updated route proposal, i.e. a new route proposed by the navigation device during the actual journey, in view of the current traffic situation on the originally proposed road. Such a new route is provided based on an evaluation of the current traffic situation in accordance with real-time traffic data. Hence, a user is provided with information on whether it was beneficial from the point of view of travelling time to follow the suggestion of the navigation device for travelling on a new route for traffic jam avoidance.

In accordance with another preferred embodiment, the alternative route is a route proposed to a driver by the vehicle navigation device, whereas the actual route is route selected by the driver despite the proposal. Hence, the user can ascertain whether or not it would have been beneficial to follow the proposal by the navigation system although, in the current case, the user decided not to follow the proposal, for whatever reason. Also, within the framework of the present invention there may be a situation wherein in case of a proposal of a new route during the journey to avoid a traffic jam on the originally proposed route, the user nevertheless chooses to stay on the originally proposed route. In that case, the newly proposed route can be considered by the navigation device according to the present invention as the "alternative route" and the travelling time thereon can be simulated and indicated, together with the indication on the actual (originally proposed) route.

Preferably, the real-time positioning data includes GPS data. Also preferably, the first route guidance module additionally calculates the position on the actual route further based on dead reckoning data. Thereby, a more precise calculation can be achieved, for instance in case of a weak reception of the real-time positioning data in view of environmental conditions such as those in the mountains or within urban canyons.

In accordance with preferred embodiments, the real-time traffic data include TMC data.

Preferably, the vehicle navigation device further comprises a speed simulation module for calculating a simulated speed of travelling of the vehicle on the alternative route. The second route guidance module takes into account a simulated speed for calculating the simulated position. More preferably, the speed simulating module calculates the simulated speed based on the received real-time traffic data. Hence, a simulated speed (expected speed of movement of the vehicle on the alternative route) can be permanently updated so as to make the simulation more precise, for instance, in case of a traffic jam that was originally present and that led to the proposal of a new route has been resolved during the travelling time of the vehicle to the point of destination, thus making a possible travelling speed on the alternative route higher than originally assumed. Of course, the speed simulating module may also take into account the information about the road network that is available in any case in the navigation system, such as speed limits on certain street sections or other information on the road network, such as the category of a street section on the alternative route, i.e. whether it is, for instance, a highway or a regional street, inside or outside a built-up area. Also preferably, the speed simulating module calculates the simulated speed by taking into account pre-stored speed history data for the individual driver, indicating the preferred driving speed of the driver under predetermined driving conditions (such as inside or outside a built-up area or on a highway). By means of such a feature, the vehicle navigation device of the present invention can be further customized for a particular user. Of course, it is possible to collect and store speed history information individually for individual users using the same vehicle. The desired user individual history information can then be activated by means of user login.

In accordance with embodiments of the present invention, the navigation device is a vehicle navigation device specifically designed for forming a part of vehicle equipment. The display may be integrated in the navigation device but may also be provided separately. A navigation device according to the present invention together with a display or including a display is sometimes called a navigation system herein.

In accordance with alternative embodiments, the navigation device may be implemented in form of a portable device, for instance a smart phone. Specifically, a smart phone appropriately programmed to run an application for performing the functionality according to the first aspect of the present invention is a navigation device according to the first aspect. Also, the display of a portable device such as smart phone connected to a navigation device not having a display itself can be used as a display for displaying the information provided according to the present invention.

Further features and advantages of the present invention are the subject matter of dependent claims.

### BRIEF DESCRIPTION OF THE DRAWINGS

Additional features and advantages of the present invention will become apparent in the following and more particular description as illustrated in the accompanying drawings, wherein:
Fig. 1 is an illustration of a street map displayed by a navigation system in accordance with the present invention, indicating a real and a simulated vehicle position on an actual and on an alternative travelling route; and
Fig. 2 is a block diagram showing an architecture overview of a vehicle navigation system in accordance with the present invention.

### DETAILED DESCRIPTION

The present invention relates to a navigation device that is adapted to give a driver the possibility of seeing whether the decision to select a particular one of a plurality of routes from a starting point to a destination point was appropriate or not. In particular, the present invention is advantageous in a situation wherein the navigation device proposes a new route in real time, while the vehicle is travelling, in order to drive around (circumnavigate) a traffic jam on the original route.

In order to do so, the navigation system runs a simulation of the vehicle position status based on traffic information for an alternative route (such as the original route that has been pre-calculated and initially selected by the driver), different from an actual route finally selected by the driver for travelling (such as the new route circumnavigating the traffic jam). The navigation system shows the simulation result to the driver on a display together with the real current vehicle position based on the actual route.

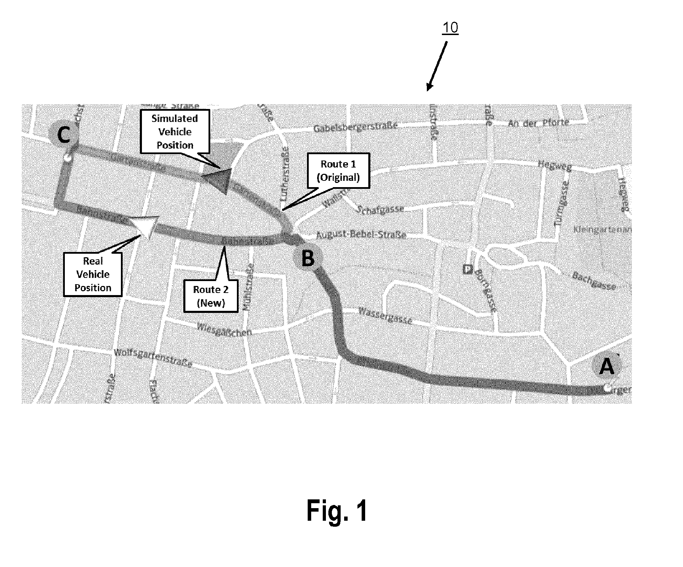

Fig. 1 illustrates a particular example of a display of a vehicle navigation system according to an embodiment of the present invention.

In the illustrated example, a driver intends to travel from a point A to a point C.

The display shows, on a street map, an original route (Route 1) extending from point A through point B to the point of destination C. Route 1 may be assumed to represent an originally proposed and preferred by the driver route for travelling from A to C.

Further, the display shows a new route (Route 2) also extending from point A through point B to point C. Route 2 may be assumed to represent a new route proposed to the driver while travelling, in order to avoid traffic congestion that has occurred on Route 1. Route 2 differs from Route 1 in that it takes a different route in the section from point B to point C. In the assumed situation, the driver has decided to follow the updated proposal of the vehicle navigation device and to drive via Route 2.

Further, the display shows a real vehicle position (actual vehicle position) at an instance of time to which the illustrated snapshot of the navigation display corresponds and a simulated vehicle position on the original route for the same instance of time.

In other words, the illustrated situation is as follows: the driver starts travelling at point A and intends to travel to point C. In view of a recommendation of the navigation system, the driver has chosen to travel along Route 1 as indicated in the figure. The navigation system receives position information and traffic information in real time. En route, while the vehicle is travelling in the vicinity of point B, the navigation system receives traffic information indicating a traffic jam having occurred on the intended travelling route (Route 1, original route). The navigation system starts a traffic jam avoidance routine and re-calculates the route so as to obtain a new route, which according to the available data allows for a faster journey time, by circumnavigating the traffic jam. Said new route (Route 2) is proposed to the driver and selected. Hence, the navigation system proceeds with calculating of the new (actual) route based on "Route 2" and indicating the real vehicle position on the chosen new route. In the framework of the present invention, however, the navigation system keeps track of the original route "Route 1", proceeds with the simulation of the journey on the original route, based on any continuously updated traffic information that is available, and indicates a simulated vehicle position together with the real position, at any instance of time.

Consequently, the driver is able to see where the car would be if he/she would not have taken the new route "Route 2", but kept driving on the originally proposed route "Route 1". For this purpose, as shown in the figure, a white arrow shows the real current vehicle position (actual position) and a grey arrow shows the simulated one.

The driver can thus see which route is faster and if he/she had made the right decision.

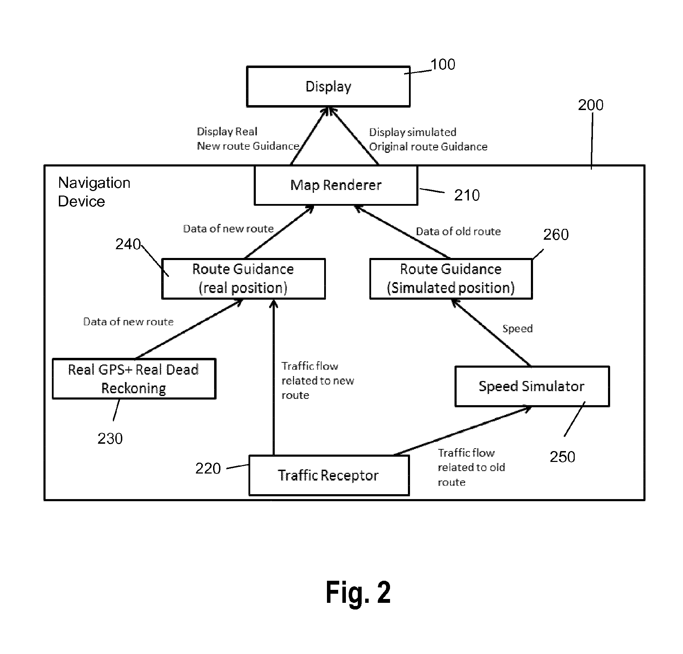

Fig. 2 illustrates the main components (modules) of a vehicle navigation device 200 in accordance with the present invention.

Navigation device 200 comprises a map renderer (display rendering module) 210, a traffic receptor (second receiving module) 220, a real GPS and dead reckoning module 230 including a GPS receiver (first receiving module), a first route guidance module 240 for calculating the real position, a speed simulator (speed simulating module) 250 and a second route guidance module 260 for calculating a simulated position.

The figure further shows display 100 for displaying the information rendered by map renderer 210. The display may be an integrated component of the vehicle navigation device, but it may also be a general display of a vehicle infotainment system, which may be used for various purposes, including providing the navigation display such as illustrated in Fig. 1. For instance, display 100 may be switchable between a navigation display and other possible displays of the infotainment system.

Traffic receptor 220 receives real-time traffic information such as broadcast information, for example, TMC messages. The received data are sent, on the one hand, to the first route guidance module 240. The first route guidance module 240 further receives real GPS data and real dead reckoning data and calculates the real position of the car on the route. The first route guidance module 240 further considers the traffic flow and incidents located on the pre-calculated route and triggers a re-routing to a new route in case a major delay occurs on the pre-calculated route.

In the case of the new route having been selected by the driver, the first route guidance module 240 proceeds with calculating and indicating the real position on the new route which has thus become the actual route. This is indicated in the figure by the term "Data of new route". Again, the data sent by real GPS and dead reckoning module 230 to the first route guidance module 240 are employed for this purpose. Any calculated real position data from the first route guidance module 240 are forwarded to map renderer 210 for being rendered for display.

In accordance with the illustrated embodiment of the present invention, the traffic receptor 220 further sends the received real-time traffic information (traffic flow data) to speed simulator 250 as well. Speed simulator 250 is a module which simulates the speed of the vehicle based on the existing traffic situation and traffic incidents on the original (old) route not selected by the driver.

Several algorithms can be designed how to simulate the speed.

For instance, in case the real-time traffic data indicates that there is no traffic at all on the route, a maximum speed will be assumed. The maximum speed will be, for instance, the maximum allowed speed for travelling along the respective road section which is normally stored in the map database of the navigation system. For instance, this speed may depend on the road category of the section or on whether section lies within or outside a built-up area such as a town. Also, any specific speed restrictions (speed limits) indicated by respective road signs are usually pre-stored in the navigation database.

Also, a slightly lower speed than the maximum allowable speed, for instance 10% or 20% lower, may be assumed to be the maximum speed, thereby taking into account the possibility of reducing the speed from time to time, for instance, in view of minor obstacles.

The simulation of the speed may further take into account pre-stored speed history information of the individual driver. If such information is available, as the maximum speed, a speed will be assumed that is the normal speed which the driver normally applies on the street section of the respective type/category, or when a predetermined maximum speed is allowed, in accordance with the history information.

Further, if the available real-time traffic data indicates blocked traffic, zero speed (0 km/h) will be assumed for the respective time period.

In case of existing medium or heavy traffic (congestion), some intermediate speed between zero and the maximum speed will be assumed, in accordance with the particular indications provided by the real-time traffic flow data. For instance, depending on the density of traffic indicated by the traffic flow data, a speed of 10, 20, 30, 40 or 50 km/h may be assumed, the invention not being limited to the above speed values which are given by way of example only.

The assumed speed value on the alternative route is forwarded from the speed simulator module 250 to the second route guidance module 260. In accordance with the assumed speed, the second route guidance module 260 simulates the movement of the vehicle on the old (alternative) road in real time. The second route guidance module 260 forwards the simulated position data to map renderer 210 for being rendered for display.

Map renderer module 210 renders the information received from both route guidance modules 240 and 260 for being displayed on the display as shown in Fig. 1.

The present invention as defined by the appended claims is not limited to those particular embodiments that have been described in detail above. The particular features of embodiments described herein can be combined as long as this does not lead to contradictions. A person skilled in the art is aware of further modifications of the described embodiments within the scope of the claims. Also, it has to be noted that the components of an apparatus in accordance with the present invention, in particular the different modules illustrated in Fig. 2, may be implemented by means of software or dedicated hardware, or a combination of both.

Also, although the present invention has been basically described herein with reference to a well known kind of a vehicle navigation device with which a vehicle is equipped - forming a part of the vehicle infotainment system or being provided separately thereof, the present invention is not limited to this. For instance, a navigation device according to the present invention can be implemented in an appropriately adapted portable device such as a smart phone.

In summary, the present invention relates to an improved vehicle navigation device that is capable of simulating the journey of a vehicle on an alternative travelling route in real time and based on real traffic data, together with indicating the guidance of the vehicle along a selected actual route. The vehicle navigation device is thus capable of indicating, on a common display screen, both the actual position of the vehicle on the actually driven route, and a simulated position where the vehicle would have been located at the same instance of time if the alternative route had been chosen for driving thereon.

## Claims

1. A navigation device comprising:
a display rendering module (210) for rendering a street map (10) of a region in which a vehicle travels, an indication of an actual route (Route 2) on which the vehicle travels on the street map (10) and an indication of an alternative route (Route 1) for the vehicle on the street map (10), for display on a display device (100),
a first receiving module (230) for receiving real time positioning data,
a second receiving module (220) for receiving real time traffic data,
a first route guidance module (240) for calculating a position of the vehicle on said actual route (Route 2) in real time, based on the received positioning data, and
a second route guidance module (260) for calculating a simulated position of the vehicle on said alternative route (Route 1) based on the received traffic data, the simulated position corresponding in time to the position calculated by the first guidance module (240),
wherein the display rendering module (210) is adapted to render an indication of said calculated position of the vehicle on the actual route (Route 2) and an indication of said simulated position on the alternative route (Route 1) for display on the display device.

2. A navigation device according to claim 1, wherein the actual route and the alternative route are routes proposed by the navigation device to a driver for selection in order to travel from a predetermined start point (A) to a predetermined point of destination (C).

3. A navigation device according to claim 1 or 2, wherein the alternative route (Route 1) is a route originally proposed to a driver by the navigation device for travelling from a predetermined start point (A) to a predetermined point of destination (C), and the actual route (Route 2) is an updated route proposal provided by the navigation device to the driver in view of a current traffic situation on the originally proposed route (Route 1) evaluated based on real time traffic data received by the second receiving module (220).

4. A navigation device according to claim 1, wherein the alternative route is a route proposed to a driver by the navigation device for travelling from a predetermined start point (A) to a predetermined point of destination (C), and the actual route is a route selected by the driver despite the proposal by the navigation device.

5. A navigation device according to any of claims 1 to 4, wherein the real time positioning data include GPS data.

6. A navigation device according to any of claims 1 to 5, wherein the first route guidance module (240) calculates said position on the actual route (Route 2) further based on dead reckoning data.

7. A navigation device according to any of claims 1 to 6, wherein the real time traffic data include TMC data.

8. A navigation device according to any of claims 1 to 7, further comprising a speed simulation module (250) for calculating a simulated speed of travelling of the vehicle on the alternative route (Route 1),
wherein the second route guidance module (260) takes into account the simulated speed calculated by the speed simulation module (250) for calculating the simulated position.

9. A navigation device according to claim 8, wherein the speed simulating module (250) calculates the simulated speed based on the received real time traffic data.

10. A navigation device according to claim 8 or 9, wherein the speed simulating module (250) calculates the simulated speed by taking into account pre-stored speed history data for the individual driver indicating a preferred driving speed of the driver under predetermined driving conditions.

11. An infotainment system for a vehicle including a navigation device (200) according to any of claims 1 to 10 and a display device (100).

12. A vehicle including an infotainment system according to claim 11.

13. A automated method performed by an a navigation device (200), comprising the steps of
displaying a street map (10) of a region in which a vehicle is traveling, on a display (100),
displaying an indication of an actual route (Route 2) on which the vehicle is traveling on the street map,
displaying an indication of an alternative route (Route 1) for the vehicle on the street map,
receiving real time positioning data,
receiving real time traffic data,
calculating a position of the vehicle on said actual route (Route 2) in real time, based on the received positioning data,
calculating a simulated position of the vehicle on said alternative route (Route 1) based on the received traffic data, the simulated position corresponding in time to the calculated position on the actual route (Route 2), and
displaying an indication of said calculated position of the vehicle on the actual route (Route 2) and an indication of said simulated position on the alternative route (Route 1).

14. A method according to claim 13, further comprising the step of calculating a simulated speed of travelling of the vehicle on the alternative route,
wherein the step of calculating a simulated position takes into account the simulated speed calculated by the step of calculating the simulated speed.

15. A computer program product including program code for causing a computer (200) to perform all steps of a method according to claim 13 or 14, when executed by the computer (200).
